# DEMANDE DE BREVET EUROPEEN

(11) **EP 1 742 176 A1**
(43) Date de publication de la demande: **10.01.2007**
(21) Numéro de dépôt: 06116532.0
(22) Date de dépôt: 03.07.2006
(51) Int. Cl.: G06Q 10/00, H04L 12/24

(54) **Procédé de construction d'un annuaire, produit programme d'ordinateur et serveur correspondants**

(30) Priorité: 04.07.2005 FR 0507114
(71) Demandeur: FRANCE TELECOM, 75015 Paris (FR)
(72) Inventeur: Savina, Bernard, 22300 Lannion (FR); Carlier, Ludovic, 22300 Lannion (FR); Daniel, Yves, 22300 Lannion (FR)
(74) Mandataire: Bioret, Ludovic

(57) **Abrégé**

L'invention concerne un procédé de construction d'un, comprenant une arborescence de données représentatives d'entités (O ; O1 à O5), chacune desdites entités comprenant un ensemble de caractéristiques et étant affectée d'un type (T ; T1 à T4) choisi dans une structure de types (C).

Selon l'invention, un tel procédé est tel qu'au moins deux entités de ladite arborescence utilisent au moins deux structures de types distinctes.

## Description

### 1. Domaine de l'invention

Le domaine de l'invention est celui de la mise en oeuvre optimisée de moyens de contrôle et de mise à jour de bases de données à structure évolutive.

En particulier, l'invention concerne la gestion des structures de base de données évolutives et de modèles organisationnels.

### 2. Solutions de l'art antérieur

Afin de mettre en oeuvre une gestion de modèles organisationnels, on connaît à ce jour les annuaires LDAP (pour « Lightweight Directory Access Protocol ») qui sont des bases de données d'annuaires électroniques mettant en oeuvre le Protocole d'annuaire sur TCP/IP.

On rappelle qu'un modèle organisationnel est un ensemble structuré d'organisations ou entités (par exemple : un groupe industriel comprenant plusieurs sites et filiales).

Une organisation est une entité qui regroupe un ensemble d'individus, une organisation peut également comprendre d'autres organisations (par exemple : un service d'une entreprise, un point de vente dans un réseau de distribution).

Un individu correspond à la donnée élémentaire que l'on veut gérer (par exemple : un salarié d'une entreprise, un bovin dans une exploitation agricole, un PC dans un réseau,...).

Une base de données d'annuaire comprend généralement une pluralité d'entités ou d'organisations, chacune comprenant un ensemble de caractéristiques et pouvant être affectée d'un type qui peut être choisi dans une structure de types (autrement appelée catalogue) figée et unique.

Les annuaires LDAP présentent un caractère structurant et permettent idéalement de mettre en oeuvre plusieurs modèles organisationnels.

Cependant, les annuaires LDAP proposent une structure d'accueil très contraignante.

En effet, de tels annuaires LDAP présentent pour premier inconvénient de ne pas pouvoir faire cohabiter deux modèles organisationnels différents dans une même instance d'annuaire. Ensuite, les modèles organisationnels qui peuvent être gérés par ces annuaires sont des modèles très généraux qui se limitent à des structures très standardisées. En outre, les possibilités d'adaptation de tels annuaires à des modèles et des organisations réelles et existantes sont très limitées. Enfin, les caractéristiques propres à chaque type d'organisation ainsi que ses spécificités "métier" ne sont pas considérées dans de tels annuaires.

Plus précisément, dans le cadre d'un annuaire LDAP, la cohabitation de différents modèles organisationnels impose un appauvrissement et une uniformisation de ces modèles pour les faire converger vers un modèle commun, généralement très éloigné des spécificités de chaque modèle. Il est donc très difficile d'insérer un modèle d'une organisation existante dans cet annuaire LDAP, et encore plus difficile de faire cohabiter une seconde organisation existante sur ce même annuaire.

De plus, dans le cadre d'un annuaire LDAP, au sein d'un même modèle organisationnel, il est impossible de personnaliser une organisation d'un type donné ou un sous-ensemble du modèle organisationnel. Or, ceci est souvent souhaitable, car deux sites d'une même entreprise peuvent avoir une organisation propre différente, par exemple, un site de production n'a pas les mêmes caractéristiques qu'un site de distribution.

### 3. Objectifs de l'invention

L'invention a notamment pour objectif de pallier ces inconvénients de l'art antérieur.

Plus précisément, un objectif de l'invention est de fournir une technique de gestion d'annuaires qui permette de réduire le temps de calcul et de créer de nouveaux modèles à partir de modèles existants sans avoir à effectuer de développements supplémentaires.

Un autre objectif de l'invention est de mettre en oeuvre une telle technique qui soit flexible, contextuelle et évolutive.

Un autre objectif de l'invention est de mettre en oeuvre une telle technique qui soit simple à mettre en oeuvre et qui ne nécessite pas de longs temps de développement.

L'invention a encore pour objectif de mettre en oeuvre une telle technique qui soit peu coûteuse.

### 4. Caractéristiques essentielles de l'invention

Ces objectifs, ainsi que d'autres qui apparaîtront par la suite, sont atteints à l'aide d'un procédé de construction d'une base de données d'annuaire, comprenant une arborescence d'entités, chacune desdites entités comprenant un ensemble de caractéristiques et étant affectée d'un type choisi dans une structure de types.

Selon l'invention, un tel procédé est tel qu'au moins deux entités de ladite arborescence utilisent chacune une structure de types distincte, parmi au moins deux structures de types disponibles.

Ainsi, il est possible, dans un système de gestion de base de données d'annuaire, de disposer d'une grande souplesse et d'une grande adaptabilité, sans qu'il soit nécessaire de redévelopper une nouvelle base de données chaque fois qu'une nouvelle situation est rencontrée (ou de retenir une solution dégradée pour cette nouvelle situation, pour la conformer au régime commun). Cette approche est techniquement mise en oeuvre à l'aide d'une arborescence d'organisations (encore appelées entités), qui permet de limiter fortement les calculs et traitements à effectuer, et de limiter l'encombrement mémoire nécessaire pour l'ensemble des structures.

Cela permet également de limiter les moyens de traitement de la base de données (par rapport à un système qui gérerait plusieurs bases de données indépendantes) tout en simplifiant la mise en oeuvre, pour les utilisateurs.

Préférentiellement, pour chaque nouvelle entité à introduire dans la base de données, si la structure de types utilisable par une entité parente de la nouvelle entité correspond à la structure de types requise pour la nouvelle entité, on affecte la structure de types utilisable par l'entité parente à la nouvelle entité.

Selon une caractéristique avantageuse de l'invention, pour chaque nouvelle entité à introduire dans la base de données, si la structure de types utilisable par une entité parente de la nouvelle entité ne correspond pas à la structure de types requise pour la nouvelle entité, le procédé comprend une étape de parcours de l'arborescence pour identifier la structure de types la plus proche de la structure de types requise, selon un critère prédéterminé.

Avantageusement, à l'issue de cette étape de parcours de l'arborescence, le procédé met également en oeuvre des étapes de :
o détection des modifications de la structure de types la plus proche, nécessaires pour que la structure de types la plus proche corresponde à la structure de types requise ;
o génération d'une nouvelle structure de types identique à la structure de types la plus proche ;
o mémorisation, dans la nouvelle structure de types, d'informations représentatives des modifications nécessaires ;
o affectation de la nouvelle structure de types à la nouvelle entité.

Ainsi, ce procédé permet de générer de nouveaux modèles organisationnels à partir de modèles existants, et donc de réduire le temps de développement de la base de données ainsi que le coût associé.

Selon une caractéristique avantageuse de l'invention, ladite arborescence met en oeuvre des règles de contenance définissant des autorisations de contenance entre lesdits types d'entité, et chacune desdites structures de types est attachée à une desdites entités et comprend au moins un type d'entité et/ou au moins une règle de contenance.

Selon un premier mode de réalisation avantageux de l'invention, à chacun des types des entités est associé au moins un attribut.

Ainsi, les ressources type d'entité et attribut apportent des premier et second niveaux de flexibilité et d'évolutivité à la base de donnée. Chaque type d'entité comprend au moins un attribut, les attributs ne sont pas partagés entre plusieurs types d'entité.

Selon un second mode de réalisation avantageux de l'invention, chacune des structures de types comprend au moins un attribut, les attributs pouvant être utilisés par les types d'entité de la structure de types.

Ainsi, on regroupe plusieurs attributs dans une même structure de types, ce qui permet à différents types de se partager ces attributs.

Selon d'autres caractéristiques avantageuses de l'invention, d'une part, pour chacune des entités, la structure de types applicable à cette entité est la première structure de types rencontrée en remontant l'arborescence en partant de ladite entité, et d'autre part, lors de la génération d'une nouvelle structure de types pour une entité, cette nouvelle structure de types comprend les règles de contenance d'une autre structure de types qui était applicable à l'entité avant la génération de la nouvelle structure de types.

Avantageusement, chacune des règles de contenance appartient à une seule structure de types, et aucune règle de contenance d'une des structures de types attachées à une entité n'est contraire à une autre règle de contenance d'une structure de types attachée à une autre entité parente de la première entité dans l'arborescence.

Préférentiellement, pour au moins une des structures de types, il comprend une étape de mise à jour de cette structure de types en fonction d'au moins une modification d'une entité à laquelle s'applique cette structure de types.

Ainsi, on peut apporter toute modification à la base de donnée.

L'invention concerne également un produit programme d'ordinateur comprenant des instructions de code de programme pour l'exécution des étapes du procédé de construction d'une base de donnée d'annuaire tel que précédemment décrit lorsque ce programme est exécuté dans et/ou par un processeur.

L'invention concerne également un serveur d'hébergement d'une base de données d'annuaire telle que précédemment décrite.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1A illustre la notion élémentaire de modèle organisationnel ;
- la figure 1B illustre des ressources organisation et individu et modélise les relations entre ces ressources selon l'invention ;
- la figure 2A présente les différentes natures d'organisations ;
- la figure 2B décrit une ressource type associée à la ressource organisation selon l'invention ;
- la figure 3A illustre la notion d'attribut qui est associé à un type d'organisation ;
- la figure 3B illustre les ressources attribut et valeur de l'attribut selon l'invention ;
- la figure 4A présente un exemple de contraintes que l'on peut vouloir exprimer pour maîtriser les contenances possibles entre les types d'organisation ;
- la figure 4B décrit une ressource règle de contenance selon l'invention ;
- la figure 5A illustre le besoin de disposer de modèles organisationnels différents en fonction de l'organisation que l'on considère ;
- la figure 5B présente une ressource structure de types (ci-après désignée par le terme catalogue) selon l'invention ;
- la figure 6 est un organigramme du modèle organisationnel d'une entreprise donnée ;
- la figure 7 illustre les règles de contenance entre les différentes organisations de l'entreprise ;
- la figure 8A présente un exemple de description selon l'invention du modèle organisationnel de l'entreprise précitée ;
- la figure 8B présente un exemple de copie d'écran correspondant à la description d'une organisation au moyen du logiciel de l'invention.

### 6. Description d'un mode de réalisation de l'invention

On se place dans la suite dans le cadre d'un mode de réalisation préférentiel du procédé de construction de bases de données d'annuaire selon l'invention.

Ce procédé peut être mis en oeuvre sous la forme d'un ou plusieurs composants logiciels (correspondant à une pluralité d'algorithmes) qui est (sont) exécuté(s) dans un ou plusieurs dispositifs d'un réseau de communication. Par exemple, ce procédé est mis en oeuvre sur le serveur d'un réseau auquel sont abonnés et connectés plusieurs clients.

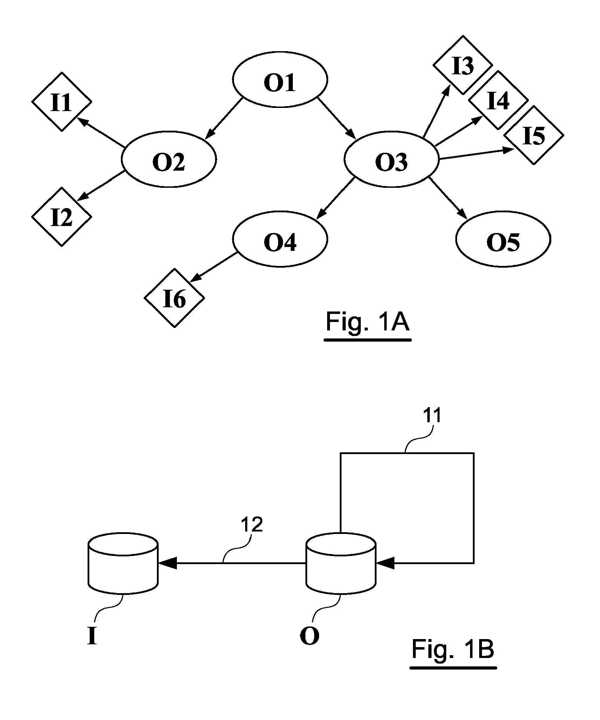

Afin de décrire et de gérer un modèle organisationnel, l'invention met en oeuvre une construction illustrée ci-après en relation avec les figures 1A à 5A et 1B à 5B.

Les schémas des figures 1A à 5A et 1B à 5B sont de deux natures : les figures 1A à 5A donnent des exemples des problèmes à résoudre, tandis que les figures 1B à 5B illustrent les ressources mises en oeuvre (c'est-à-dire l'ensemble des ressources manipulées et éventuellement persistées par le logiciel selon l'invention) par la construction de l'invention pour les résoudre.

Cette construction est complétée, ci-après, par la description d'un ensemble de services permettant de l'utiliser.

On illustre, en relation avec la figure 1A, la notion élémentaire de modèle organisationnel, c'est-à-dire la contenance entre les entités (ci-après désignées par organisations) O1 à O5 qui conduit à une représentation "en arbre" (ou arborescence d'organisations) de la structure organisationnelle. Une organisation "parente", par exemple l'organisation O1 peut contenir des organisations "filles", par exemple des organisations O2 et O3 et ces organisations "filles" peuvent chacune à leur tour jouer le rôle d'organisation parente, par exemple l'organisation 03, pour d'autres organisations, par exemple les organisations 04 et O5.

Elle montre également le regroupement d'individus I1 à I6 au sein des organisations O1 à O5, par exemple, les individus I1 et I2 sont rattachés à l'organisation O2. Seule l'organisation racine de l'arbre O1 n'a pas d'organisation parente.

On illustre avec la figure 1B deux ressources manipulables que sont une organisation O et un individu I et modélise les relations entre ces ressources, notamment les relations parent ― fille 11 et les relations organisation - individu 12.

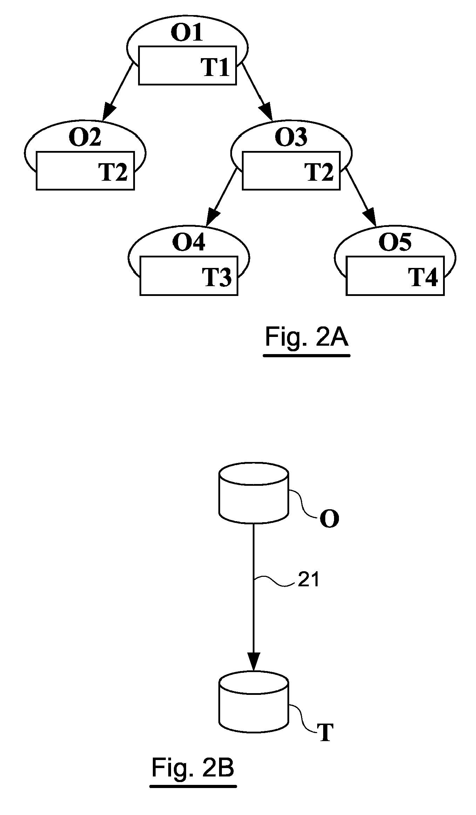

La figure 2A présente quant à elle les différentes natures d'organisations et donc les différentes natures d'organisation qui peuvent descendre d'une organisation. On définit ainsi, pour chaque organisation, un type d'organisation qui lui est associé. Par exemple, l'organisation O1 est de type T1, les organisations O2 et O3 sont de type T2, l'organisation O4 est de type T3 et l'organisation O5 est de type T4. Les organisations O2 et O3 de type T2 sont des organisations descendantes de l'organisation O1.

La figure 2B illustre donc une ressource supplémentaire (désignée par « TypeOrganisation ») qui est le type associé à chaque organisation et modélise la relation 21 entre l'organisation O et le typeOrganisation T représentant la nature de cette organisation.

L'introduction de cette ressource apporte un premier niveau de flexibilité et d'évolutivité à la construction selon l'invention. Il est en effet possible d'ajouter, supprimer ou modifier des types d'organisation.

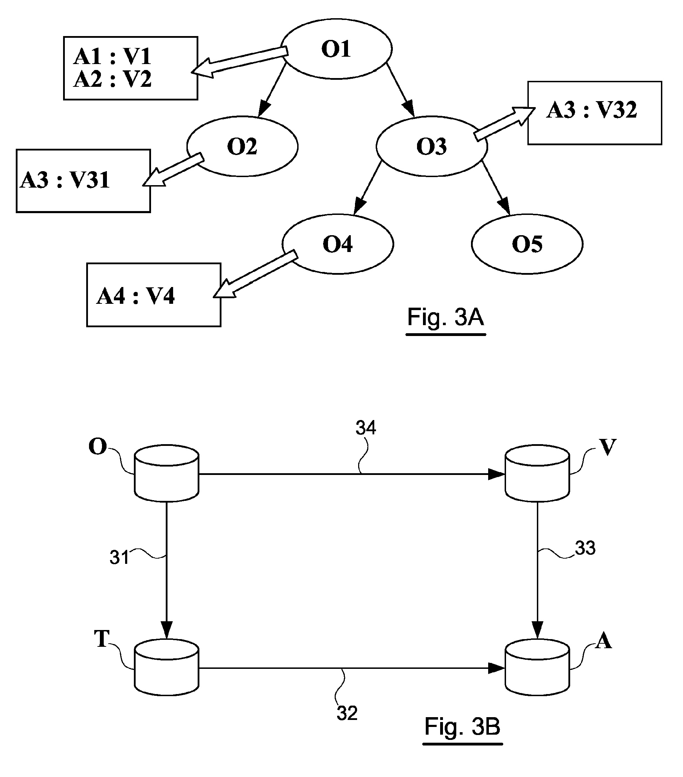

La figure 3A décrit plus particulièrement la notion d'attribut qui est associé à un type d'organisation. Pour chaque organisation, le ou les attributs associé(s) à l'organisation possède(nt) chacun une valeur. On peut ainsi observer une diversité, non seulement au niveau des attributs que l'on peut souhaiter gérer en fonction de la nature des organisations, mais également au niveau des valeurs que l'on peut leur donner.

Par exemple, pour les organisations de type T1 (notamment O1), on souhaite gérer deux attributs A1 de valeur V1 et A2 de valeur V2 ; pour les organisations de type T2 (notamment O2 et O3), on souhaite gérer un attribut A3 de valeur V31 pour O2 et V32 pour O3 ; pour les organisations de type T3 (notamment O4), on souhaite gérer un attribut A4 de valeur V4 pour 04.

Comme illustré par la figure 3B, on introduit donc deux ressources supplémentaires que sont l'attribut A associé au type T et la valeur V de l'attribut A au niveau de l'organisation O. La figure 3B illustre également les relations 31, 32, 33, 34 entre respectivement :
- l'organisation O et le type T de l'organisation ;
- le type T et l'attribut A associé;
- l'attribut A et sa valeur V ; et
- l'organisation O et la valeur V.

De façon générale, un type donné possède un certain nombre d'attributs et une organisation de ce même type doit donc posséder une valeur pour chacun de ces attributs.

La ressource attribut apporte un deuxième niveau de flexibilité et d'évolutivité. Il est en effet possible d'ajouter, supprimer ou modifier des attributs.

Un attribut peut présenter un certain nombre de caractéristiques (citons à titre d'exemple, son caractère obligatoire ou pas, sa valeur par défaut, une expression régulière permettant de contraindre les valeurs possibles...).

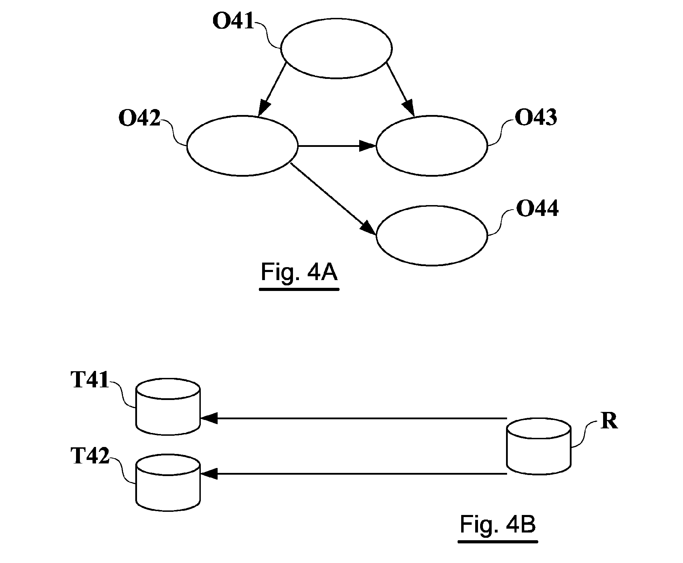

On présente, en relation avec la figure 4A, un exemple de contraintes que l'on veut généralement exprimer pour maîtriser les contenances possibles entre les types d'organisation. On distingue quatre organisations O41 de type T1, O42 de type T2, O43 de type T3 et O44, de type T4. Ainsi, par exemple, il n'est pas possible pour une organisation de type T3, par exemple O43, de contenir une organisation de type T4, par exemple O44 (si l'on admet bien sûr que cette figure 4A illustre l'exhaustivité des règles autorisées).

La figure 4B illustre donc une ressource supplémentaire (désignée par « règleContenance ») qui est la règle de contenance R qui consigne l'autorisation de contenance entre un type "contenant" T41 et un type "contenu" T42.

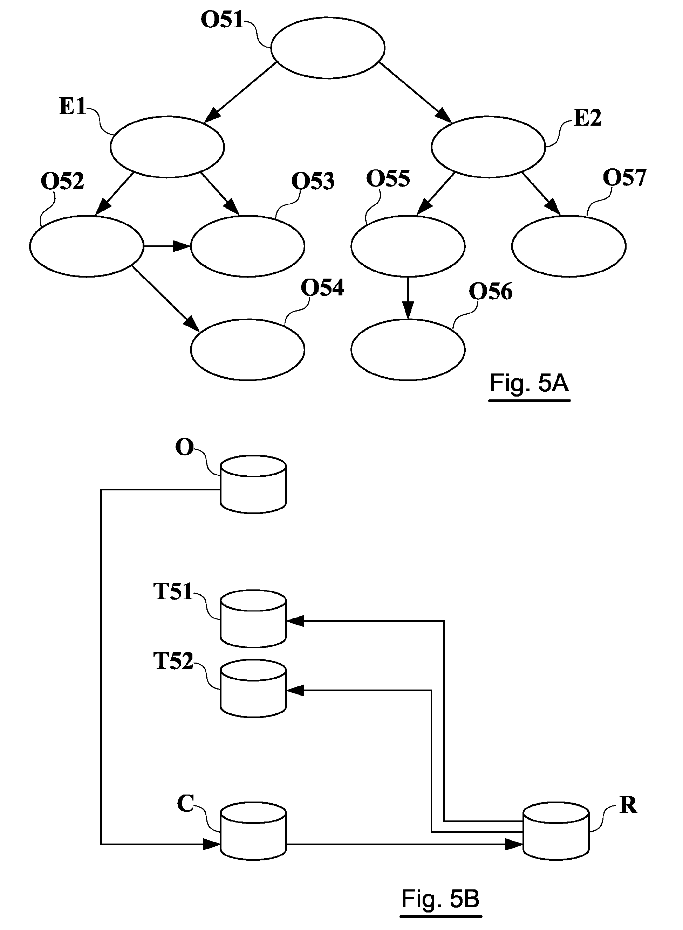

La figure 5A illustre le besoin de disposer de modèles organisationnels différents en fonction de l'organisation que l'on considère, donc en fonction du contexte.

D'une organisation racine O51 descendent deux organisations E1 et E2. Les deux organisations E1 et E2 peuvent vouloir mettre en oeuvre des modèles différents mais utilisant des éléments communs. Par exemple, dans le sous-arbre délimité par l'organisation E1, on souhaite utiliser les types T2, T3 et T4 respectivement pour les organisations O52, O53, O54 alors que dans le sous-arbre délimité par l'organisation E2, on veut utiliser les types T3, T4 et T5 respectivement pour les organisation O55, O57 et O56.

De plus, les règles de contenance sont différentes dans les deux sous-arbres précités.

La figure 5B propose de rendre les types d'organisation et les règles de contenance applicables contextuellement aux organisations par introduction d'une ressource supplémentaire : le catalogue (autrement appelé la structure de type). Le catalogue regroupe, pour le contexte où il est applicable (c'est-à-dire un sous-arbre de l'arbre des organisations) l'ensemble des nouveaux types introduits par le catalogue et les règles de contenance régissant l'utilisation de ces types.

Ainsi, une organisation O peut utiliser un catalogue C qui comprend notamment la règle de contenance R entre le type contenant T51 et le type contenu T52 ainsi que les types T51 et T52.

Le catalogue C peut également contenir des types d'autres catalogues. Une règle de contenance peut en effet utiliser des types définis dans un autre catalogue que celui pour lequel elle est définie moyennant la règle de gestion R3 décrite ci-après.

La ressource attribut est, dans le procédé de construction évolutive selon le mode de réalisation préférentiel de l'invention, rattachée à un et un seul type d'organisation.

Selon une variante de ce mode de réalisation, il est aisé, si nécessaire, d'attacher un attribut à un et un seul catalogue mais d'autoriser un type à utiliser les attributs définis dans son catalogue et ceux dont ce catalogue hérite. Un catalogue rattaché à l'organisation O hérite d'un attribut si celui-ci est contenu par un catalogue d'une organisation ascendante de l'organisation O.

On présente ci-après différentes règles de gestion qui régissent la construction précitée, et donc le logiciel selon l'invention.

Selon une première règle de gestion R1, un catalogue est défini dans une et une seule organisation appelée organisation de rattachement du catalogue.

Selon une seconde règle de gestion R2, le catalogue "applicable" dans le contexte d'une organisation est le premier catalogue rencontré en remontant l'arbre des organisations à partir de (et en incluant) cette organisation.

Selon une troisième règle de gestion R3, à sa création, le catalogue d'une organisation déterminée d'un type déterminé ne contient aucun type. Il contient par contre un sous-ensemble des règles de contenance du catalogue précédemment applicable à l'organisation déterminée. Celui-ci est constitué des règles de contenance accessibles en parcourant les règles à partir du type "contenant" déterminé.

On présente en annexe 1, un exemple d'algorithme permettant de déterminer si un type est accessible à partir d'un autre type dans un catalogue donné. Ainsi, un type X d'un catalogue C est accessible à partir d'un type Y du catalogue C s'il existe une règle de contenance de C qui lie X à Y.

On présente en annexe 2, un exemple d'algorithme permettant de définir si une règle de contenance est accessible à partir d'un type donné dans un catalogue donné (c'est le cas si la règle de contenance fait intervenir le type donné).

Ces annexes 1 et 2 font partie intégrante de la présente description.

Selon une quatrième règle de gestion R4, une règle de contenance appartient à un et un seul catalogue, mais il est possible de redéfinir la même règle de contenance dans plusieurs catalogues.

Selon une cinquième règle de gestion R5, les règles de contenance d'un premier catalogue attaché à une première organisation ne peuvent être contraires aux règles de contenance définies dans un second catalogue applicable à une seconde organisation parente de la première organisation.

Ainsi, un second type ne pourra-t-il être contenu par un premier type dans un premier catalogue que si le second type est accessible depuis le premier type dans un second catalogue.

Selon une sixième règle de gestion R6, un type déterminé n'est défini que dans un seul catalogue (appelé catalogue propriétaire de ce type). Ce type déterminé apparaît alors dans une liste de types possédés par chaque catalogue.

Ce type est cependant utilisable dans des règles de contenance de tout catalogue éventuellement rattaché à des organisations descendantes de l'organisation de rattachement du catalogue, sous réserve de respecter la cinquième règle de gestion R5 précitée.

Selon une septième règle de gestion R7, la suppression d'un type provoque la suppression de toutes les règles de contenance l'utilisant.

Selon une huitième règle de gestion R8, un type doit être supprimé s'il n'existe plus dans son catalogue propriétaire de règle de contenance pour laquelle il est "contenu".

En effet, dans le cas d'un tel type, on ne peut plus le choisir comme enfant d'un autre type. Cependant, cette règle de gestion n'est pas applicable au type de l'organisation racine.

Selon une neuvième règle de gestion R9, un type ne peut pas être supprimé s'il existe une organisation de ce type.

Selon une dixième règle de gestion R10, seule l'organisation "racine" n'a pas d'organisation parente.

On présente ci-après différents services associés à la construction précitée et pouvant être mis en oeuvre par le logiciel selon l'invention.

On peut créer une seconde organisation dans une première organisation. Pour ce faire, il est nécessaire de retrouver le catalogue applicable dans la première organisation, d'en extraire les règles de contenance qui ont comme contenant le type de la première organisation. On en déduit les types possibles pour la seconde organisation et pour chacun de ces types l'ensemble de ses attributs spécifiques.

On peut déterminer quel est le catalogue applicable à la seconde organisation au moyen de la seconde règle de gestion R2 précitée.

Si le catalogue applicable selon R2 ne correspond pas au catalogue que l'on souhaiterait affecter à la seconde organisation (dit catalogue requis), on peut également mettre en oeuvre les étapes suivantes :
o recherche, dans l'arborescence d'organisations de la base de données, du catalogue le plus proche du catalogue requis ;
o détection des modifications nécessaires pour que le catalogue le plus proche corresponde au catalogue requis ;
o génération d'un nouveau catalogue identique au catalogue le plus proche ;
o mémorisation, dans le nouveau catalogue, d'informations représentatives des modifications nécessaires ;
o affectation du nouveau catalogue à la seconde organisation.

On peut supprimer une organisation. Plusieurs choix de mise en oeuvre sont possibles. On peut par exemple interdire la suppression d'une organisation si elle a des organisations descendantes, ou supprimer automatiquement les organisations descendantes. La dixième règle de gestion R10 doit être respectée.

La suppression d'une organisation provoque la suppression du catalogue qui lui est éventuellement attaché, ce qui permet d'être conforme à la première règle de gestion R1.

On peut également créer un catalogue: Cette création n'est possible que pour une organisation qui ne possède pas déjà son propre catalogue. Le catalogue ainsi créé est initialisé conformément aux troisième et quatrièmes règles de gestion R3 et R4. Le catalogue créé ne contient initialement aucun type. Le fait d'initialiser le catalogue créé avec les règles de contenance conformes à la troisième règle de gestion R3 permet d'assurer qu'il est conforme aux règles de contenance ayant permis la création d'éventuelles organisations descendantes de l'organisation pour laquelle on le crée.

On peut ensuite ajouter une nouvelle règle de contenance à un catalogue déterminé. Les types pouvant être utilisés par cette nouvelle règle de contenance appartiennent à l'ensemble des types du catalogue déterminé ou atteignables à partir du type de l'organisation de rattachement de ce catalogue dans le catalogue applicable dans l'organisation parente de l'organisation de rattachement.

On peut également supprimer une règle de contenance déterminée d'un catalogue déterminé attaché à une organisation déterminée. Conformément aux cinquième, septième et huitième règles de gestions respectivement R5, R7 et R8, cette suppression peut provoquer successivement :
- la suppression d'autres règles de contenance du catalogue déterminé ;
- la suppression de règles de contenance de catalogues attachés à des organisations descendantes de l'organisation déterminée ;
- la suppression de types du catalogue déterminé ;
- la suppression de types de catalogues attachés à des organisations descendantes de l'organisation déterminée.

Lors des processus précités, la neuvième règle de gestion R9 doit être respectée. Pour garantir l'intégrité du modèle, il faut assurer l'atomicité transactionnelle de l'ensemble des suppressions précitées.

On peut aussi créer un nouveau type dans un catalogue. La création de ce nouveau type doit obligatoirement être associée à la création d'au moins une règle de contenance défmissant ce type comme contenu, conformément à la huitième règle de gestion R8.

On peut, en outre, supprimer un type d'un catalogue déterminé attaché à une organisation déterminée. Conformément aux cinquième, septième et huitième règles de gestions respectivement R5, R7 et R8, cette suppression peut provoquer successivement :
- la suppression de règles de contenance du catalogue déterminé;
- la suppression de règles de contenance de catalogues attachés à des organisations descendantes de l'organisation déterminée;
- la suppression d'autres types du catalogue déterminé ;
- la suppression de types de catalogues attachés à des organisations descendantes de l'organisation déterminée ;

Lors des processus précités, la neuvième règle de gestion R9 doit être respectée. Pour garantir l'intégrité du modèle, il faut assurer l'atomicité de l'ensemble des suppressions précitées.

On peut ensuite supprimer un catalogue déterminé attaché à une organisation déterminée. Cette suppression entraîne la suppression des types et des règles de contenance du catalogue déterminé, qui peuvent, conformément aux cinquième, septième et huitième règles de gestions respectivement R5, R7 et R8, provoquer à leur tour successivement : :
- la suppression de règles de contenance de catalogues attachés à des organisations descendantes de l'organisation déterminée ;
- la suppression de types de catalogues attachés à des organisations descendantes de l'organisation déterminée ;

Lors des processus précités, la neuvième règle de gestion R9 doit être respectée. Pour garantir l'intégrité du modèle, il faut assurer l'atomicité de l'ensemble des suppressions précitées.

On décrit ci-après, à titre d'exemple, la mise en oeuvre du logiciel selon l'invention afin de décrire et gérer un modèle organisationnel d'une entreprise.

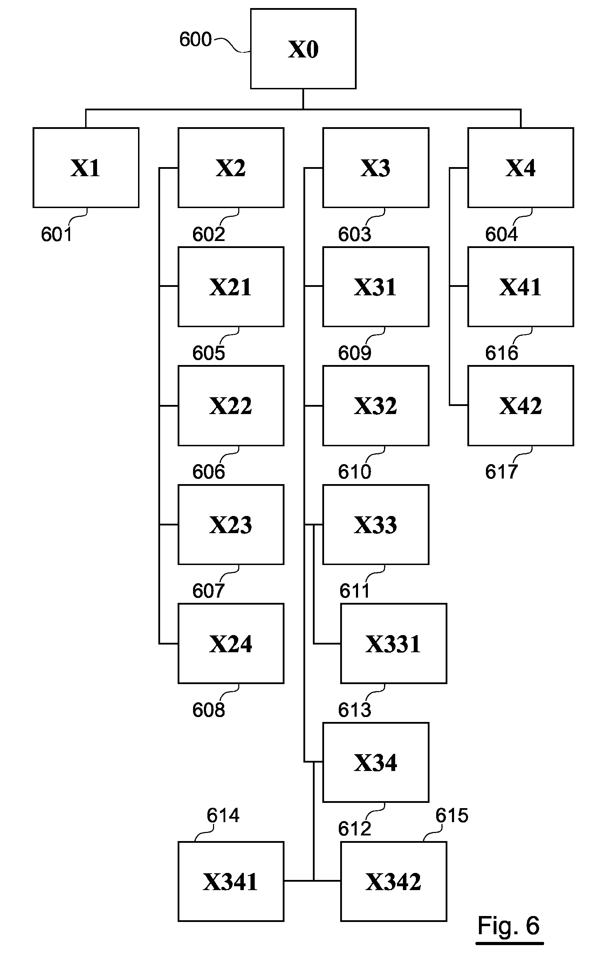

La figure 6 est un organigramme du modèle organisationnel de l'entreprise 600. L'entreprise 600 (également référencée x0) comprend une présidence 601 (également référencée x1), un service Marketing et Ventes 602 (également référencée x2), une unité Production 603 (également référencée x3) et un service Recherche et Développement 604 (également référencée x4). Le service Marketing et vente 602 comprend lui-même une équipe de direction Marketing et Ventes 605 (également référencée x21), une unité Marketing 606 (également référencée x22), une unité Ventes Réseau de Distribution 607 (également référencée x23) et une unité Support Après-Vente 608 (également référencée x24).

L'unité de production 603 comprend une équipe de direction Production 609 (également référencée x31), une unité Production Plastiques 610 (également référencée x32), une unité Production papier 611 (également référencée x33), comprenant elle-même une usine 613 (également référencée x331) dite Usine de Lannion, et une unité Production Bois 612 (également référencée x34) comprenant elle-même une usine 614 (également référencée x341), dite Usine de Marseille et une usine 615 (également référencée x342), dite usine de Bordeaux.

Enfin, le service Recherche et Développement 604 comprend une équipe de direction R&D 616 (également référencée x41) et un laboratoire 617 (également référencée x42), dit Laboratoire Paris.

Pour le modèle organisationnel de l'entreprise 600, on peut par exemple définir un type entreprise 71 pour x0, un type division 72 pour x2, x3 et x4, un type équipe de direction 73 pour x1, x21, x31 et x41, un type sous-division 74 pour x22, x23, x24, x32, x33 et x34 et un type implantation 75 pour x331, x341, x342 et x42.

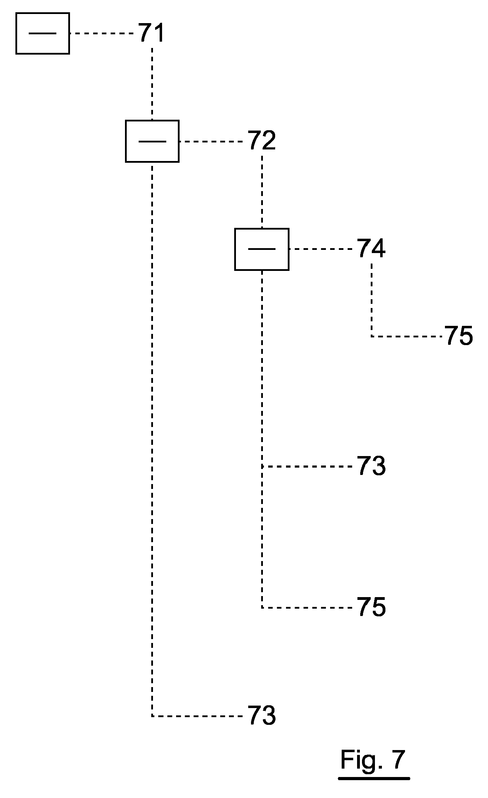

On peut également définir des relations de contenance possibles entre ces types, la figure 7 illustre ces relations de contenance.

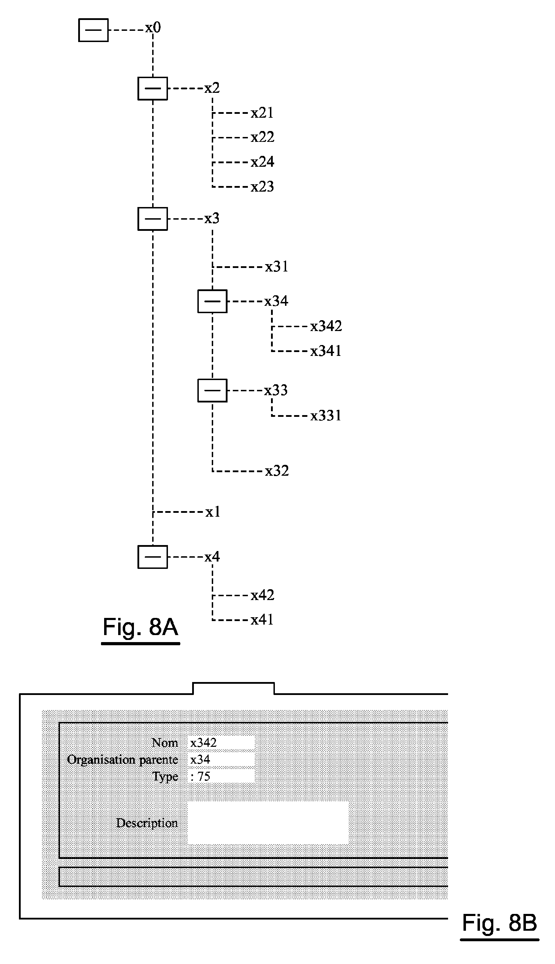

On illustre, en relation avec la figure 8A, un exemple de description selon l'invention du modèle organisationnel de l'entreprise précitée au moyen des types d'organisation et des relations de contenance précédemment décrit en relation avec la figure 7.

Les éléments de ce modèle organisationnel sont des organisations. Certaines organisations peuvent également contenir une autre organisation et/ou des individus.

On peut observer que chaque organisation du même type peut contenir une sous structure différente et propre à elle-même.

La figure 8B présente un exemple de copie d'écran correspondant à la description d'une organisation au moyen du logiciel selon l'invention.

Le champ description peut contenir toute information permettant de caractériser l'organisation, par exemple, « Cette usine a été fondée en 1890 et est spécialisée dans la production de bois ».

Bien entendu, l'invention n'est pas limitée aux exemples de réalisation mentionnés ci-dessus.

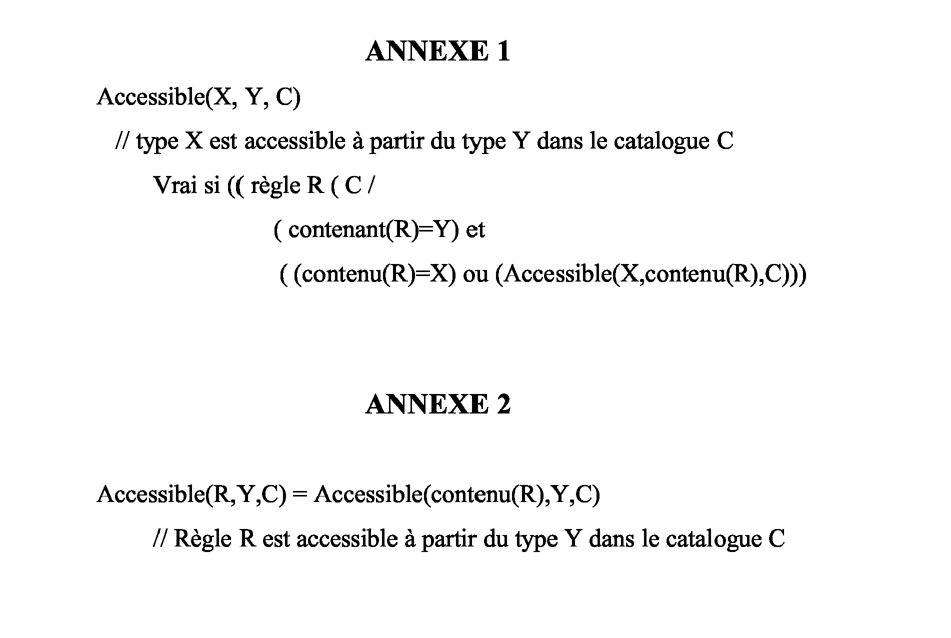

## Revendications

1. Procédé de construction d'un annuaire, comprenant une arborescence de données représentatives d'entités (O; O1 à O5), chacune desdites entités comprenant un ensemble de caractéristiques et étant affectée d'un type (T ; T1 à T4) choisi dans une structure de types (C), **caractérisé en ce qu'**au moins deux entités de ladite arborescence utilisent chacune une structure de types distincte, parmi au moins deux structures de types disponibles.

2. Procédé selon la revendication 1, **caractérisé en ce que**, pour chaque nouvelle entité (O ; O1 à O5) à introduire dans ledit annuaire, si la structure de types utilisable par une entité parente de ladite nouvelle entité correspond à une structure de types requise pour ladite nouvelle entité, ledit procédé affecte ladite structure de types utilisable par ladite entité parente à ladite nouvelle entité.

3. Procédé selon l'une quelconque des revendications 1 et 2, **caractérisé en ce que**, pour chaque nouvelle entité (O ; O1 à O5) à introduire dans ledit annuaire, si la structure de types utilisable par une entité parente de ladite nouvelle entité ne correspond pas à une structure de types requise pour ladite nouvelle entité, ledit procédé comprend une étape de parcours de ladite arborescence pour identifier la structure de types la plus proche de ladite structure de types requise, selon un critère prédéterminé.

4. Procédé selon la revendication 3, **caractérisé en ce qu'**à l'issue de ladite étape de parcours, ledit procédé comprend en outre des étapes de :
o détection des modifications de ladite structure de types la plus proche, nécessaires pour que ladite structure de types la plus proche corresponde à ladite structure de types requise ;
o génération d'une nouvelle structure de types identique à ladite structure de types la plus proche ;
o mémorisation, dans ladite nouvelle structure de types, d'informations représentatives desdites modifications nécessaires ;
o affectation de ladite nouvelle structure de types à ladite nouvelle entité (O ; O1 à O5).

5. Procédé selon l'une quelconque des revendications 1 à 4, **caractérisé en ce que** ladite arborescence met en oeuvre des règles de contenance (R) définissant des autorisations de contenance entre lesdits types d'entité (T ; T1 à T4), et **en ce que** chacune desdites structures de types (C) est attachée à une desdites entités et comprend au moins un type (T ; T1 à T4) d'entité et/ou au moins une règle de contenance (R).

6. Procédé selon la revendication 5, **caractérisé en ce qu'**à chacun desdits types (T ; T1 à T4) des entités (O; O1 à O5) est associé au moins un attribut.

7. Procédé selon la revendication 5, **caractérisé en ce que** chacune desdites structures de types comprend au moins un attribut, lesdits attributs pouvant être utilisés par lesdits types d'entité de ladite structure de types.

8. Procédé selon l'une quelconque des revendications 5 à 7, **caractérisé en ce que**, pour chacune desdites entités (O ; O1 à O5), la structure de types applicable à ladite entité est la première structure de types rencontrée en remontant l'arborescence en partant de ladite entité, et **en ce que**, lors de la génération d'une nouvelle structure de types pour une entité, ladite nouvelle structure de types comprend les règles de contenance d'une autre structure de types qui était applicable à ladite entité avant la génération de ladite nouvelle structure de types.

9. Procédé selon l'une quelconque des revendications 5 à 8, **caractérisé en ce que** chacune desdites règles de contenance (R) appartient à une seule structure de types (C), et **en ce qu'**aucune règle de contenance (R) d'une desdites structures de types attachées à une entité, appelée entité fille, n'est contraire à une autre règle de contenance d'une desdites structures de types attachées à une entité parente de ladite entité fille dans ladite arborescence.

10. Procédé selon l'une quelconque des revendications 1 à 9, **caractérisé en ce que**, pour au moins une desdites structures de types (C), il comprend une étape de mise à jour de ladite structure de types en fonction d'au moins une modification d'une entité (O ; O1 à O5) qui utilise ladite structure de types.

11. Produit programme d'ordinateur pour la construction d'une annuaire, comprenant une arborescence de données représentatives d'entités (O ; O1 à O5), chacune desdites entités comprenant un ensemble de caractéristiques et étant affectée d'un type (T ; T1 à T4) choisi dans une structure de types (C), ledit produit programme d'ordinateur comprenant des instructions de code de programme enregistré sur un support utilisable dans un ordinateur pour l'utilisation sélective, par au moins deux entités de ladite arborescence, de structures de types distinctes, parmi au moins deux structures de types disponibles.

12. Serveur d'hébergement d'un annuaire, comprenant une arborescence de données représentatives d'entités (O; O1 à O5), chacune desdites entités comprenant un ensemble de caractéristiques et étant affectée d'un type (T ; T1 à T4) choisi dans une structure de types (C), au moins deux entités de ladite arborescence utilisant chacune une structure de type distincte parmi au moins deux structures de types disponibles.
